# EUROPÄISCHE PATENTANMELDUNG

(11) **EP 3 995 236 A1**
(43) Veröffentlichungstag der Anmeldung: **11.05.2022**
(21) Anmeldenummer: 20205689.1
(22) Anmeldetag: 04.11.2020
(51) Int. Cl.: B22F 10/28, B22F 10/47, B33Y 10/00, B28B 1/00

(54) **ADDITIV HERGESTELLTES BAUTEIL MIT STÜTZSTRUKTUR UND VERFAHREN ZU HERSTELLUNG EINES SOLCHEN**

(71) Anmelder: Siemens Energy Global GmbH & Co. KG, 81739 München (DE)
(72) Erfinder: Müller, Vinzenz, 10559 Berlin (DE); Geisen, Ole, 14057 Berlin (DE); Hajduk, Michael, 12059 Berlin (DE); Heitmann, Timo, 10245 Berlin (DE)

(57) **Zusammenfassung**

Die Erfindung betrifft ein Bauteil (01), das in einem Pulverbett-Fertigungsprozess ausgehend von einer Grundebene (09) hergestellt wurde. Dabei umfasst das Bauteil (01) ein Fertigteil (02) und eine Stützstruktur (05). Das Fertigteil (02) lässt sich aufteilen in einen einfachen, von der Grundebene (09) ohne Stützstruktur (05) herstellbaren Teilabschnitt (03) und in einen schwierigen, nicht ohne eine Stützstruktur (05) herstellbaren Teilabschnitt (04). Die Stützstruktur (05) ist über einer erste Teilanbindung (21) mit dem einfachen Teilabschnitt (03) und über eine zweite Teilanbindung (22, 32) mit dem schwierigen Teilabschnitt (04) verbunden.

Zur Vereinfachung der nachfolgenden Bearbeitung ist vorgesehen, dass die erste Teilanbindung (21) eine Vielzahl Verbindungspunkte (24) mit einem äquivalenten Durchmesser (26) von höchstens 1 mm aufweist.

## Beschreibung

Die Erfindung betrifft ein additiv hergestelltes Bauteil zur weiteren Herstellung eines Fertigteils, wobei das Fertigteil aufgrund der Gestaltung eine Stützstruktur erfordert, da eine unmittelbare Fertigung des gesamten Fertigteils mittels bekannter Fertigungsprozesse ohne die Stützstruktur nicht möglich ist. Weiterhin betrifft die Erfindung das entsprechende Verfahren zur Herstellung des Bauteils.

Aus dem Stand der Technik sind verschiedene Verfahren zur additiven Herstellung eines Bauteils bekannt. Relevant in diesem Zusammenhang ist die Herstellung in dem sogenannten Pulverbett-Fertigungsprozess, bei dem ein schichtweiser Aufbau des Bauteils erfolgt. Zu Herstellung eines metallischen Bauteils wird hierbei in aller Regel das sogenannte SLM-Verfahren (Selective-Laser-Melting Verfahren) eingesetzt, bei dem schichtweise an der Stelle des jeweiligen Bauteils ein pulverförmiger Werkstoff aufgeschmolzen wird. In diesem Prozess erfolgt die Herstellung des Bauteils ausgehend von einer Grundfläche auf der schichtweise das entsprechende Pulver aufgetragen wird.

Nun ist es aus dem Stand der Technik bekannt, dass keine beliebigen Geometrien ohne entsprechende Hilfsmaßnahmen herstellbar sind. Auftretende Probleme können einerseits die unzureichende Wärmeabfuhr der durch den Schmelzprozess eingebrachten Wärme oder andererseits ein lokales Absinken der gerade hergestellten Struktur im Pulverbett mit der Folge einer ungenauen Abbildung des Fertigteils sein. Daher werden regelmäßig Stützstrukturen eingesetzt, welche nach Herstellung des Bauteils wieder entfernt werden müssen, um das Fertigteil zu erhalten. Um einerseits den Aufwand zur Herstellung der Stützstrukturen als auch um den Aufwand zur Entfernung der Stützstruktur gering zu halten, wird versucht, die jeweilige Stützstruktur auf das Notwendige zu reduzieren. Dabei werden in aller Regel die Stützstrukturen ausgehend von der Grundfläche aufgebaut.

Bei der Verwendung von Stützstrukturen, welche sich von der Grundfläche aus bis zu dem problematischen Teilabschnitt des Fertigteils erstrecken, ist es von besonderem Nachteil, wenn der Abstand von der Grundfläche bis zum Fertigteil sehr groß ist. Weiterhin weisen mitunter Fertigteile Geometrie hinauf, bei denen der Einsatz von Stützstrukturen ausgehend von der Grundfläche zur Abstützung von problematischen Teilabschnitten nicht möglich ist.

In diesen Fällen werden die eingesetzten Stützstrukturen einerseits an einem zunächst unproblematisch herstellbaren Teilabschnitt des Fertigteils angebunden, um von dort ausgehend den problematischen Teilabschnitt abstützen zu können. Als nachteilig erweist es sich in aller Regel, dass gerade in diesen Fällen die Zugänglichkeit zu den Stützstrukturen erschwert ist und somit die Entfernung der Stützstruktur mit besonderen Schwierigkeiten verbunden ist.

Aufgabe der vorliegenden Erfindung ist es daher, eine Stützstruktur bereitzustellen, deren Entfernung vom Bauteil einfacher zu realisieren ist.

Die gestellte Aufgabe wird durch eine erfindungsgemäße Ausführungsform eines Bauteils nach der Lehre des Anspruchs 1 gelöst. Ein erfindungsgemäßes Verfahren zur Herstellung eines derartigen Bauteils ist im Anspruch 7 angegeben. Vorteilhafte Ausführungsformen sind Gegenstand der Unteransprüche.

Das gattungsgemäße Bauteil ist zunächst einmal in einem Pulverbett-Fertigungsprozess hergestellt. Welche der hierzu bekannten Herstellungsweisen angewendet wurde, ist zunächst unerheblich. Zumindest definiert der Pulverbett-Fertigungsprozess eine Grundebene, welche sich in einer X-Richtung und einer Y-Richtung erstreckt. Dabei ist das Bauteil von der Grundebene aus aufgebaut, wobei die Grundebene somit auch eine Z-Richtung des Bauteils definiert. Diesbezüglich ist anzumerken, dass die Grundebene für die Definition des gattungsgemäßen Bauteils lediglich die Festlegung von Koordinaten bzw. einer Ausrichtung ermöglicht.

Um welche Art von Bauteil es sich hierbei handelt, ist ebenso zunächst unerheblich. Zumindest eignet sich die erfindungsgemäße Lösung insbesondere bei einem Bauteil, welches aus einem metallischen Werkstoff besteht. Gleichfalls kann die Ausführungsform vorteilhaft bei einem Bauteil aus einem keramischen Werkstoff Verwendung finden.

Das hier betrachtete Bauteil umfasst ein Fertigteil. Dabei kann das Fertigteil ein Endprodukt darstellen, jedoch wird in aller Regel auch das Fertigteil weiteren Herstellungsprozessen unterzogen. Das Fertigteil lässt sich in Bezug auf den verwendeten Pulverbett-Fertigungsprozess in verschiedene Abschnitte hinsichtlich der Herstellbarkeit unterteilen. So gibt es zumindest einen einfachen Teilabschnitt, welcher sich dadurch gekennzeichnet, dass dieser Bereich des Fertigteils von der Grundebene ausgehend, ohne eine Stützstruktur unmittelbar im Pulverbett-Fertigungsprozess herstellbar ist. Weiterhin umfasst das Fertigteil einen schwierigen Teilabschnitt, welcher dadurch gekennzeichnet ist, dass dessen Herstellung im Pulverbett-Fertigungsprozess nicht ohne weiteres möglich ist, sodass zur Erzielung des gewünschten Ergebnisses die Verwendung einer Stützstruktur erforderlich ist.

Entsprechend umfasst das betrachtete Bauteil weiterhin zumindest eine Stützstruktur, welche die Herstellung des schwierigen Teilabschnitts ermöglicht. Dabei ist die Stützstruktur über eine zweite Teilanbindung mit dem schwierigen Teilabschnitt verbunden. In Abgrenzung zu Ausführungen, bei denen die Stützstruktur sich gleichfalls von der Grundebene aus erstreckt, ist in diesem Falle vorgesehen, dass die Stützstruktur mit einer ersten Teilanbindung mit dem einfachen Teilabschnitt verbunden ist. Somit ist eine Abstützung eines schwierigen Teilabschnitts auch bei größerer Entfernung von der Grundebene oder bei mangelnder Zugänglichkeit zwischen Grundebene und dem schwierigen Teilabschnitt ermöglicht.

Wenn nun im Stand der Technik üblicherweise versucht wird, bei derartigen Stützstrukturen den Querschnitt möglichst gering zu halten und insbesondere eine in der Erstreckung möglichst kleine Verbindung zwischen der Stützstruktur und dem Fertigteil zu realisieren, ist im Gegensatz erfindungsgemäß vorgesehen, dass die erste Teilanbindung mittels einer Vielzahl voneinander getrennter Verbindungspunkte realisiert wird und sich hierdurch über einen im Gegensatz zur bekannten Ausführung wesentlich größeren Flächenbereich erstreckt. Wesentlich ist es hierbei, dass jeder einzelne der Verbindungspunkte möglichst klein gewählt wird. Entsprechend ist vorgesehen, dass ein äquivalenter Durchmesser des jeweiligen Verbindungspunktes höchstens 1 mm beträgt. Der äquivalente Durchmesser ergibt sich hierbei aus der Bestimmung des kleinsten Querschnittes des jeweiligen Verbindungspunktes als Verbindung der Stützstruktur mit dem einfachen Teilabschnitt des Fertigteils.

Durch die Verwendung einer Vielzahl kleiner Verbindungspunkte, anstelle einer einzelnen, möglichst klein gewählten Verbindung zwischen der Stützstruktur und dem einfachen Teilabschnitt, wird insbesondere die mechanische Entfernung der Stützstruktur vom einfachen Teilabschnitt, d. h. der Trennung in der ersten Teilanbindung, deutlich erleichtert. Dies ist insbesondere von besonderem Vorteil, da die vorgesehene Lösung gerade für diejenigen Anwendungsfälle vorgesehen ist, bei denen eine erschwerte Zugänglichkeit gegeben ist. Gleichwohl kann die Lösung auch eingesetzt werden, wenn eine gute Zugänglichkeit vorhanden ist.

Ausgehend von der erfindungsgemäßen Lösung mit der Vielzahl an Verbindungspunkten kann es jedoch zur Sicherstellung des Aufbaus von Stützstruktur und Fertigteil erforderlich werden, örtlich begrenzt in der ersten Teilanbindung eine verbesserte Verbindung, zum Beispiel zur besseren Wärmeabfuhr, zu schaffen. Daher wird eine Ausführung als von der Erfindung umfasst angesehen, bei der ein Brückenelement oder mehrere Brückenelemente in der ersten Teilanbindung eingesetzt werden. Zur Gewährleistung der erfindungsgemäßen Wirkung wird dabei jedoch gefordert, dass das Brückenelement bzw. jedes der Brückenelemente eine maximale Breite von 2 mm aufweist, wobei die Erstreckung in zweiter Richtung zunächst unerheblich ist.

Wenn ein Brückenelement oder mehrere Brückenelemente vorhanden sind, so ist es besonders vorteilhaft, wenn in der ersten Teilanbindung die Verbindung zwischen der Stützstruktur und dem einfachen Teilabschnitt im Wesentlichen von den Verbindungspunkten realisiert wird. Hierbei ist die Anzahl der Verbindungspunkte im Verhältnis zur Größe des/der Brückenelemente derart zu wählen, dass die Querschnittsfläche der Verbindungspunkte in Summe zumindest der 5-fachen Querschnittsfläche des/der Brückenelemente in Summe entspricht. Besonders vorteilhaft ist, wenn die Querschnittsfläche der Verbindungspunkte zumindest der 20-fachen Querschnittsfläche des/der Brückenelemente entspricht.

Eine verbesserte Ablösung der Stützstruktur vom Fertigteil wird erreicht, wenn die Verbindungspunkte möglichst klein sowie das Brückenelement möglichst schmal gewählt werden. Entsprechend ist es von Vorteil, wenn die Breite des Brückenelements bzw. der Brückenelemente höchstens 1 mm beträgt. Weiterhin ist es von Vorteil, wenn der äquivalente Durchmesser der Verbindungspunkte höchstens 0,5 mm beträgt.

Weiterhin ist ein größerer Abstand zwischen den Verbindungspunkten vorteilhaft. Entsprechend ist es zu bevorzugen, dass der Abstand zwischen benachbarten Verbindungspunkten zumindest dem Zweifachen des äquivalenten Durchmessers entspricht. Besonders vorteilhaft ist es jedoch, wenn der Abstand zwischen benachbarten Verbindungspunkten zumindest dem Fünffachen des äquivalenten Durchmessers entspricht.

Um die Stabilität sowie die Wärmeabfuhr der ersten Teilanbindung zu verbessern, ist es vorteilhaft, wenn der Abstand zwischen dem Fertigteil und der Stützstruktur in der ersten Teilanbindung möglichst gering gewählt wird. Entsprechend ist es vorteilhaft, wenn in zumindest dem mehrheitlichen Anteil (d.h. im Bereich von zumindest 50% der Fläche) der ersten Teilanbindung der Abstand zwischen dem Fertigteil und der Stützstruktur höchstens 1 mm beträgt. Besonders vorteilhaft ist es darüber hinaus, wenn der Abstand höchstens 0,6 mm beträgt.

Der verwendete Pulverbett-Fertigungsprozess führt zu einer spezifischen Ausdehnung des Schmelzpunktes ausgehend von einem Strahlmittelpunkt des eingesetzten energieintensiven Strahls - in der Regel eines Laserstrahls. So führt beispielsweise ein entlang eines Vektors geführter Strahl zu einem Aufschmelzen des pulverförmigen Materials mit einer prozessabhängigen Breite und Tiefe des aufgeschlossenen Materials. Entsprechend lässt sich eine spezifische Schmelzpunktausdehnung als gemittelter Wert von Breite und Tiefe für das Bauteil bestimmen.

Wird nun die vorteilhafte Ausführung mit möglichst kleinen Verbindungspunkten betrachtet, so ist es besonders vorteilhaft, wenn der äquivalente Durchmesser der Verbindungspunkte kleiner ist als die spezifische Schmelzpunktausdehnung. Hieraus abgeleitet ist es offensichtlich, dass bei Herstellung der Verbindungspunkte kein durchgehendes Aufschmelzen des Materials von der Stützstruktur bis zum Fertigteil erfolgen darf.

Grundsätzlich ist es vorteilhaft, wenn kein Brückenelement erforderlich ist. Sofern jedoch eine hinreichende Stabilität für die Stützstruktur in Abstützung an den einfachen Teilabschnitt sowie eine hinreichende Wärmeabfuhr von der Stützstruktur über den einfachen Teilabschnitt nicht bereits mit den Verbindungspunkten erzielt werden kann, so ist vorzugsweise ein Brückenelement vorzusehen. Dabei ist es besonders vorteilhaft, wenn dieses Brückenelement am zur Grundebene weisenden Rand der ersten Teilanbindung angeordnet ist.

Zur Herstellung des gattungsgemäßen Bauteils wird zunächst ein Modell eines Fertigteils benötigt. Unter Berücksichtigung des vorgesehenen Herstellungsprozesses im Pulverbett-Fertigungsprozess lässt sich ermitteln, welcher Bereich des Fertigteils ohne weitere Stützstrukturen unmittelbar im vorgesehenen Prozess herstellbar ist und welcher Bereich des Fertigteils ohne Hilfsmaßnahmen nicht in gewünschter Qualität abbildbar ist. Der erste Bereich, der ausgehend von der Grundebene herstellbar ist, bildet dabei den einfachen Teilabschnitt. Demgegenüber lässt sich derjenige Bereich, welcher nicht ohne Hilfsmaßnahmen herstellbar ist als schwieriger Teilabschnitt abgrenzen.

Im folgenden Schritt ist die Bestimmung einer Stützstruktur erforderlich, welche die Herstellung des schwierigen Teilabschnitts im vorgesehenen Pulverbett-Fertigungsprozess ermöglicht.

Mit der Definition des Bauteils umfassend das Fertigteil und die Stützstruktur, kann nunmehr die eigentliche Herstellung des Bauteils im Pulverbett-Fertigungsprozess erfolgen, indem schichtweise ein pulverförmiges Material in einen Bauraum eingebracht wird, wobei die Geometrie des Bauteils durch ein Aufschmelzen des pulverförmigen Materials Schicht für Schicht abgebildet wird. Hierbei wird ein energieintensiver Strahl - in der Regel ein Laserstrahl - eingesetzt, welcher am jeweiligen Strahlmittelpunkt zu einem Aufschmelzen des umgebenden pulverförmigen Materials führt.

Wesentlich für die erfindungsgemäße Ausführung ist dabei die Anbindung der Stützstruktur an den einfachen Teilabschnitt über eine erste Teilanbindung, wobei die erste Teilanbindung entsprechend der erfindungsgemäßen oder einer hierzu vorteilhaften Ausführung durch den schichtweisen Aufschmelzprozess abgebildet wird.

Die korrekte Abbildung des Fertigteils unter Zuhilfenahme der Stützstruktur, insbesondere unter Berücksichtigung der erfindungsgemäßen Ausführung der ersten Teilanbindung, wird begünstigt, wenn vorteilhaft in jeder Schicht zunächst die Geometrie der Stützstruktur und erst nachfolgend die Geometrie des Fertigteils erzeugt wird.

Wesentlich für die Erfindung ist es, dass die Verbindungspunkte möglichst klein ausgeführt sind, aber dennoch die hinreichende Stabilität zur Sicherung der Lage der Stützstruktur gegeben ist. Unter Berücksichtigung, dass um den Strahlmittelpunkt herum ein Aufschmelzen des umgebenden Materials erfolgt, ist es zur Erzielung kleiner Verbindungspunkte besonders vorteilhaft, wenn der Strahlmittelpunkt bei der Erzeugung der Verbindungspunkte in jedem Fall vom Fertigteil, d.h. von der danach erzeugten Geometrie des Fertigteils, beabstandet ist. Hierdurch wird erreicht, dass die Verbindungspunkte kleiner als die Breite des beidseitig des Laserstrahls aufgeschmolzenen Materials gewählt werden können. Es ist offensichtlich, dass für die erfindungsgemäße Ausführung in der ersten Teilanbindung der Strahlmittelpunkt neben den Verbindungspunkten vom Fertigteil beabstandet sein muss, da neben den Verbindungspunkten keine unmittelbare Verbindung zwischen der Stützstruktur und dem Fertigteil vorgesehen ist.

Es ist offensichtlich, dass der Abstand vom Strahlmittelpunkt zum Fertigteil nicht größer sein darf als es einem Radius des vom Strahl aufgeschmolzenen Materials entspricht, um die tatsächliche Verbindung der Stützstruktur mit dem Fertigteil in dem jeweiligen Verbindungspunkt gewährleisten zu können.

Es hat sich gezeigt, dass die Realisierung kleiner Verbindungspunkte vorteilhaft erreicht werden kann, wenn der Abstand vom Strahlmittelpunkt zum Fertigteil zumindest 0,05 mm beträgt. Somit kann sichergestellt werden, dass die Breite des Verbindungspunktes kleiner ist als die Breite des vom Strahl aufgeschmolzenen Materials. Besonders vorteilhaft ist, wenn der Abstand vom Strahlmittelpunkt zum Fertigteil zumindest 0,1 mm beträgt.

Weiterhin ist es vorteilhaft, wenn in der ersten Teilanbindung zwar neben den Verbindungspunkten keine unmittelbare Verbindung zwischen der Stützstruktur und dem Fertigteil vorhanden ist, der Abstand zwischen den beiden Abschnitten jedoch möglichst gering ist. Dieses verbessert eine Wärmeabfuhr von der Stützstruktur auf das Fertigteil und erhöht die Stabilität der Verbindung. Daher ist es von Vorteil, wenn der Abstand vom Strahlmittelpunkt bei der Fertigung der Stützstruktur im Bereich der ersten Teilanbindung zum Fertigteil maximal 1,5 mm beträgt. Dies gilt für zumindest der halben Ausdehnung der ersten Teilanbindung. Vorzugsweise wird ein Abstand von maximal 1 mm eingehalten. Besonders vorteilhaft ist es jedoch, wenn der Abstand geringer oder höchstens 0,7 mm beträgt. Weiterhin ist es besonders vorteilhaft, wenn über einen möglichst großen Anteil der ersten Teilanbindung, beispielsweise über einen Flächenanteil von zumindest 90%, der Abstand höchstens 1,5 mm bzw. bevorzugt höchstens 1 mm bzw. besonders bevorzugt höchstens 0,7 mm beträgt.

Beim typischerweise eingesetzten Herstellungsverfahren im Pulverbett-Fertigungsprozess ist die Ausdehnung des Schmelzpunktes, d. h. die Breite und die Tiefe des aufgeschlossenen Materials, ausgehend vom Strahlmittelpunkt, nicht nur abhängig von beispielsweise der Intensität des Strahl, sondern weiterhin abhängig von der Position des Bauteils im jeweiligen Bauraum. Dies beruht insbesondere aufgrund der unterschiedlicher Auslenkung des Strahls je nach Position im Bauraum. Entsprechend weist das Bauteil eine örtlich spezifische Schmelzpunktausdehnung als Mittelwert von lokaler Breite und Tiefe auf.

Wird nunmehr der Herstellungsprozess, bezogen auf die Erzeugung der einzelnen Verbindungspunkte betrachtet, so ist in besonders vorteilhafter Weise der äquivalente Durchmesser kleiner als die spezifische Schmelzpunktausdehnung, bestimmt an der Position des jeweiligen Verbindungspunktes.

Weiterhin lässt sich ein spezifischer Schmelzradius als Ausdehnung des aufgeschmolzenen pulverförmigen Materials, ausgehend vom Strahlmittelpunkt gemessen, senkrecht zum Fertigteil bestimmen.

Zur Erzielung eines hinreichend kleinen Querschnitts bei der Erzeugung der Verbindungspunkte ist vorteilhaft, einen Abstand vom Strahlmittelpunkt zum Fertigteil von zumindest dem 0,1-fachen Schmelzradius einzuhalten. Besonders vorteilhaft ist es jedoch, wenn der Abstand zumindest dem 0,5-fachen Schmelzradius entspricht, wodurch ein besonders kleiner Querschnitt des jeweiligen Verbindungspunktes realisierbar wird.

Dabei sollte jedoch eine hinreichende Stabilität beachtet werden. Dazu ist es vorteilhaft, wenn der Abstand vom Strahlmittelpunkt zum Fertigteil maximal dem 0,9-fachen Schmelzradius entspricht. Besonders vorteilhaft entspricht der Abstand bei der Erzeugung des jeweiligen Verbindungspunktes höchstens dem 0,8-fachen Schmelzradius.

Wird nunmehr der vorteilhaft geringe Abstand von der Stützstruktur zum Fertigteil im Bereich der ersten Teilanbindung betrachtet, so wird vorteilhaft der Strahl derart geführt, dass der Abstand über den mehrheitlichen Teil der ersten Teilanbindung maximal dem 10-fachen Schmelzradius entspricht. Somit kann eine Wärmeübertragung über das zwischen der Stützstruktur und dem Fertigteil liegende pulverförmige Material erfolgen. Vorteilhafter ist es dabei, wenn der Abstand höchsten dem 5-fachen Schmelzradius entspricht. Besonders vorteilhaft ist es, wenn ein möglichst geringer Abstand zwischen der Stützstruktur und dem Fertigteil gewählt wird, bei der es jedoch nicht zu einer unmittelbaren Verbindung zwischen der Stützstruktur und dem Fertigteil in der ersten Teilanbindung (d.h. naheliegend ohne Betrachtung von Verbindungspunkten und der möglichen Brückenelemente) kommt. Entsprechend wird besonders vorteilhaft ein Abstand von höchstens dem 0,3-fachen Schmelzradius gewählt. Hierdurch wird eine Wärmeübertragung über die geringe zwischenliegenden Pulverschicht erheblich verbessert.

Die Verwendung eines energieintensiven, entlang einer Bahn verlaufenden Strahls, führt jeweils am Ende einer derartigen Bahn zu einer abgerundeten Aufschmelzzone. In der ersten Teilanbindung wird die Verbindung zwischen der Stützstruktur und dem Fertigteil nur durch die Verbindungspunkte - oder die Verbindungspunkte und dem Brückenelement - erzeugt, wobei erfindungsgemäß die Verbindungspunkte möglichst klein sein sollen. Um nunmehr den durch den Aufschmelzprozess resultierenden Querschnitt des jeweiligen Verbindungspunktes möglichst genau festlegen zu können, ist es vorteilhaft, wenn der Vektor, entlang dessen der Strahl bei der Abbildung der Stützstruktur geführt wird, mit demjenigen Vektor, entlang dessen der Strahl bei Abbildung des Fertigteils geführt wird, fluchtet. Somit treffen die gegenüberliegenden Aufschmelzzonen am Ende des jeweiligen Vektors bzw. des Strahls bei der Abbildung der Stützstruktur auf der einen Seite und bei der Abbildung des Fertigteils auf der anderen Seite in den Verbindungspunkten aufeinander. Dies ermöglicht die vorteilhafte vorherige Bestimmung des Querschnitts des jeweiligen Verbindungspunktes bei festgelegten Vektoren für den Strahl.

In den nachfolgenden Figuren werden beispielhafte Ausführungsformen für ein erfindungsgemäßes Bauteil gezeigt:
- Fig. 1: eine erste schematische Darstellung für ein Beispiel eines erfindungsgemäßen Bauteils;
- Fig. 2: eine zweite schematische Darstellung für ein weiteres Beispiel eines erfindungsgemäßen Bauteils;
- Fig. 3: eine Darstellung des Fertigteils als Bestandteil des Bauteils von Fig. 1;
- Fig. 4: eine Explosionsdarstellung des Bauteils von Fig. 1 aufgeteilt in den einfachen Teilabschnitt, den schwierigen Teilabschnitt und die Stützstruktur;
- Fig. 5: skizzenhaft die erste Teilanbindung zwischen dem einfachen Teilabschnitt und der Stützstruktur;
- Fig. 6: eine Detailansicht auf einen Verbindungspunkt sowie ein Brückenelement der ersten Teilanbindung;
- Fig. 7: eine Detailansicht mit einer schematischen Darstellung des Herstellungsverfahrens zur Abbildung der Verbindungspunkte.

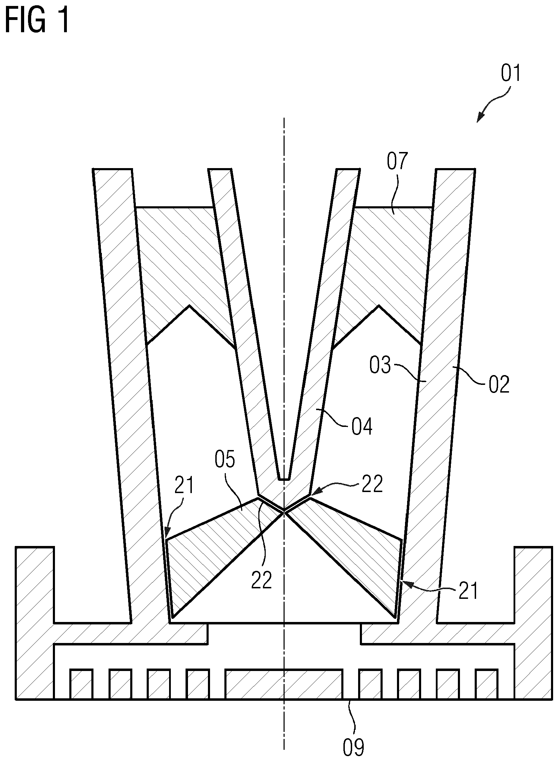

In der Figur 1 wird rein schematisch ein erstes Ausführungsbeispiel für ein erfindungsgemäßes Bauteil 01 skizziert, welches 01 ein Fertigteil 02 und eine Stützstruktur 05 aufweist. Für nachfolgende Prozesse wird im Grunde nur das Fertigteil 02 benötigt, während demgegenüber die Stützstruktur 05 lediglich den Herstellungsprozess ermöglichen soll und insofern eigentlich unerwünscht ist.

Vorgesehen ist, dass das Bauteil 01 in einem Pulverbett-Fertigungsprozess hergestellt wird. Hierbei wird das Bauteil 01, ausgehend von einer Grundebene 09 aufgebaut. Insofern wird das Bauteil 01 auf einer Seite durch eben jene Grundebene 09 begrenzt. Die Grundebene 09 erstreckt sich in einer X-Richtung und einer Y-Richtung und definiert eine Z-Richtung, in der das Bauteil 01 schichtweise aufgebaut wird.

Das vorgesehene Herstellungsverfahren schränkt hierbei die mögliche Gestaltung des Bauteils ein, da in Abhängigkeit von der Geometrie die Abbildung dieser Geometrie mitunter nicht ohne weiteres möglich ist. Dies führt zu einer möglichen Abgrenzung des Fertigteils 02, in einen Bereich, dem einfachen Teilabschnitt 03, welcher 03 ohne weiteres im vorgesehenen Herstellungsprozess herstellbar ist. Demgegenüber weist das Fertigteil 02 einen weiteren Bereich auf, den schwierigen Teilabschnitt 04, welcher 04 ohne Hilfsmaßnahmen nicht im vorgesehenen Herstellungsprozess fehlerfrei abbildbar ist. In diesem Ausführungsbeispiel ragt der schwierige Teilabschnitt 04, angebunden über Rippen 07 an den einfachen Teilabschnitt 02, frei in Richtung der Grundebene 09, ohne dass es möglich wäre, den schwierigen Teilabschnitt 04 ausgehend von der Grundebene 09 aufzubauen.

Um nunmehr die Herstellung des Fertigteils 02 mit dem schwierigen Teilabschnitt 04 zu ermöglichen ist eine Stützstruktur 05 erforderlich. Die Stützstruktur 05 ist hierbei über eine erste Teilanbindung 21 mit dem einfachen Teilabschnitt 03 und über eine zweite Teilanbindung 22 mit dem schwierigen Teilabschnitt 04 verbunden.

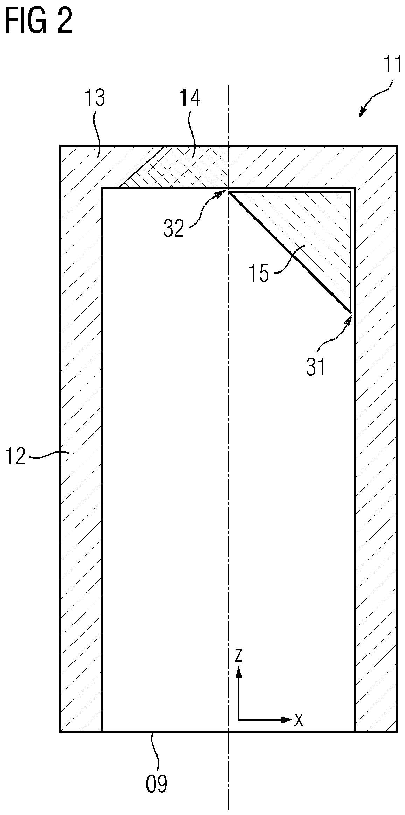

In der Figur 2 wird ein weiteres Ausführungsbeispiel für ein erfindungsgemäßes Bauteil 11 schematisch skizziert. Dieses 11 umfasst gleichfalls ein Fertigteil 12 sowie eine Stützstruktur 15. Dabei weist das Fertigteil 12 eine zur Grundebene 09 offene, topfartige Gestalt auf. Hierbei bildet die senkrechte, sich in der Z-Richtung erstreckende Wand einen einfachen Teilabschnitt 13 und die waagerechte, sich parallel zur Grundebene 09 erstreckende Wand den schwierigen Teilabschnitt 14.

In diesem Falle wäre es zwar möglich, eine Stützstruktur ausgehend von der Grundebene 09 bis zum schwierigen Teilabschnitt 14 vorzusehen, jedoch wäre diese dann unverhältnismäßig groß auszuführen. Daher ist auch hier vorgesehen, dass eine Stützstruktur 15 eingesetzt wird, welche 15 über eine erste Teilanbindung 31 mit dem einfachen Teilabschnitt 13 und über eine zweite Teilanbindung 32 mit dem schwierigen Teilabschnitt 14 verbunden ist.

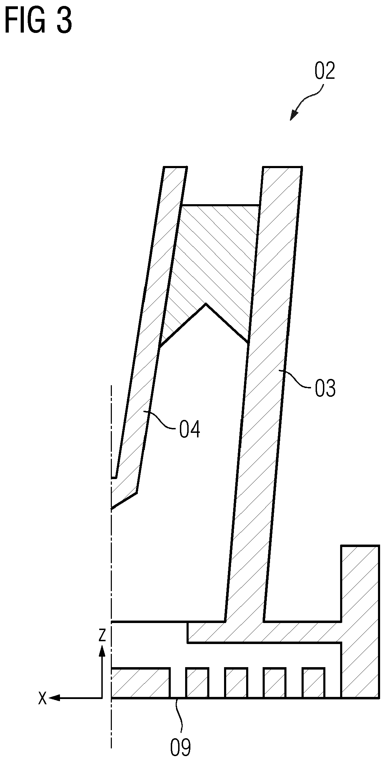

In der Figur 3 wird nunmehr das Fertigteil 02 des Bauteils aus Fig. 01 skizziert, wobei nur eine Hälfte dargestellt ist. Zu erkennen ist der Aufbau des Fertigteils 02 ausgehend von der Grundebene 09, welche 09 sich in einer X-Richtung und Y-Richtung erstreckt, in Richtung der Z-Achse. Bei dem schichtweisen Aufbau im Pulverbett-Herstellungsverfahren ist der einfache Teilabschnitt 03 herstellbar, während demgegenüber der schwierige Teilabschnitt 04 quasi frei in der Luft hängt und somit der Anfang für den schichtweisen Aufbau fehlt. Entsprechend ist hier die Stützstruktur 05 erforderlich.

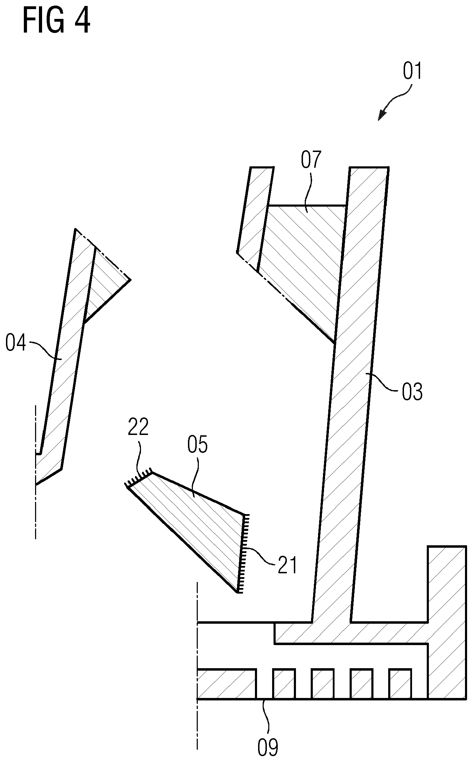

Hierzu zeigt die Figur 4 die Aufteilung des Bauteils 01 - gleichfalls ist wiederum nur eine Hälfte dargestellt - umfassend einen einfachen Teilabschnitt 03 und einen schwierigen Teilabschnitt 04 des Fertigteils 02 sowie die Stützstruktur 05.

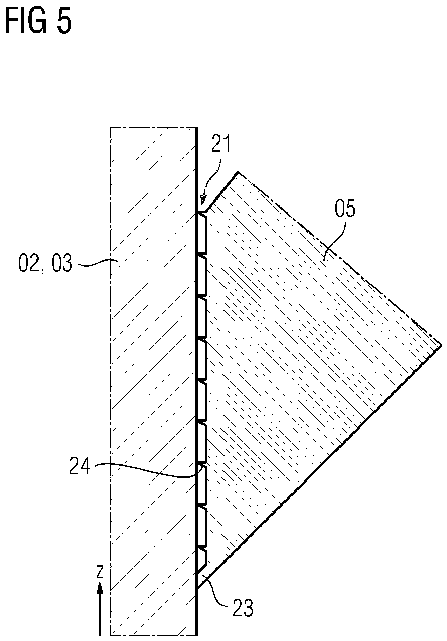

In der Figur 5 wird der Bereich der ersten Teilanbindung 21 des Bauteils 01 schematisch dargestellt. Grundsätzlich ist erfindungsgemäß vorgesehen, dass die Verbindung zwischen dem einfachen Teilabschnitt 03 des Fertigteils 02 der Stützstruktur 05 von einer Vielzahl an kleinen Verbindungspunkten 24 realisiert wird, und zwischen den Verbindungspunkten 24 ein geringer freier Abstand verbleibt.

Weiterhin zu erkennen ist, dass am zur Grundebene 09 weisenden Rand der ersten Teilanbindung 21 eine im Verhältnis zu den Verbindungspunkten 24 breitere Anbindung in Form eines Brückenelements 23 vorhanden ist.

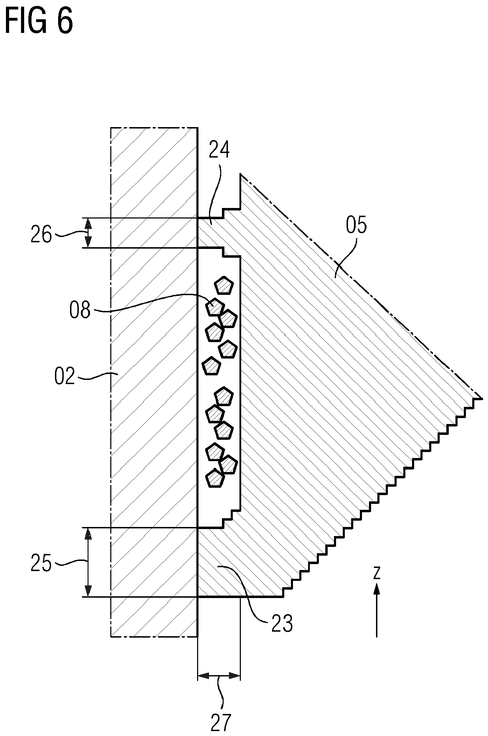

Hierzu skizziert die Figur 6 im Detail die erste Teilanbindung 21 im Bereich des Brückenelements 23 sowie des sich darüber befindenden Verbindungspunktes 24. Das Brückenelement 23 ist am unteren Rand der Stützstruktur 05 als Verbindung zum Fertigteil vorgesehen, um anfänglich eine hinreichende Wärmeabfuhr gewährleisten zu können. Dabei sollte jedoch auch die Breite 25 des Brückenelements möglichst gering gewählt werden. Es hat sich als vorteilhaft erwiesen, wenn das Brückenelement über wenige Schichten hinweg im Pulverbett-Herstellungsprozess abgebildet wird.

Demgegenüber ist auf jeden Fall anzustreben, dass die Verbindungspunkte 24 möglichst klein gewählt werden. Insbesondere sollte erreicht werden, dass ein äquivalenter Durchmesser 26 des Verbindungspunktes 24 kleiner ist als die übliche Breite des durch den Herstellungsprozess aufgeschmolzenen Materials. Somit kann im nachfolgenden Prozess eine leichtere Entfernung der Stützstruktur 05 vom Fertigteil 02 erreicht werden.

Weiterhin zu erkennen ist, dass der Abstand 27 zwischen der Stützstruktur 05 dem Fertigteil 02 in der ersten Teilanbindung 21 gering gewählt ist. Zwischen der Stützstruktur 05 und dem Fertigteil 02 kommt es dabei naheliegend zum Einschluss von Partikeln 08 des beim Herstellungsprozess eingesetzten pulverförmigen Materials. Der geringe Abstand begünstigt eine Wärmeübertragung von der Stützstruktur 05 auf das Fertigteil 02 über die zwischenliegenden eingeschlossenen Partikel 08.

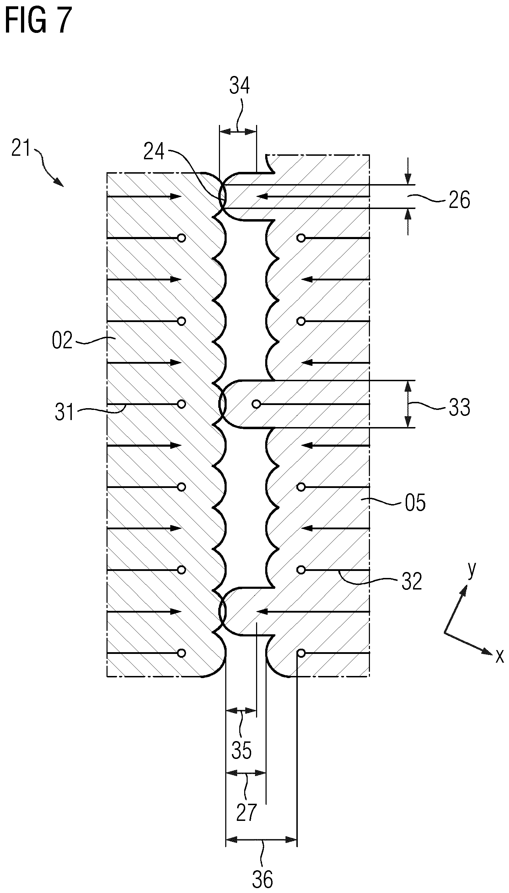

Die Herstellung des Bauteils 01 im vorgesehenen Pulverbett-Herstellungsprozess im Bereich der ersten Teilanbindung 21 wird schematisch in der Figur 7 skizziert. Auf rechter Seite ist ansatzweise Stützstruktur 05 skizziert. Gegenüberliegend auf linker Seite befindet sich abschnittsweise das Fertigteil 02. Im Herstellungsprozess erfolgt mittels eines energieintensiven Strahls ein Aufschmelzen der umliegenden Partikel. Hierbei wird der jeweilige Strahl entlang eines Vektors 31, 32 geführt. Um den Strahlenmittelpunkt herum gibt es eine Schmelzzone mit einer Schmelzpunktausdehnung 33. Weiterhin lässt sich am Ende eines jeweiligen Vektors ein Schmelzradius 34 ermitteln, welcher 34 die Ausdehnung der Schmelzzone, ausgehend vom Strahlmittelpunkt, am Ende des Vektors in Richtung Fertigteil 02 angibt.

Wie aus der Darstellung zu erkennen ist, weist der jeweilige Verbindungspunkt 24 einen äquivalenten Durchmesser 26 auf, welcher 26 kleiner ist als es der Schmelzpunktausdehnung 33 entspricht. Um dieses zu erreichen, wird vorteilhaft ein Abstand 35 vom Strahlmittelpunkt zum Fertigteil 02 bei der Abbildung der Verbindungspunkte 24 gewählt, welcher 24 geringer ist als der Schmelzradius 34, aber vorteilhaft größer als der 0,6-fache Schmelzradius 34.

Weiterhin kann der Darstellung die Lage der jeweiligen Vektoren 31 zur Abbildung des Fertigteils 02 und der Vektoren 32 zur Abbildung der Stützstruktur 05 entnommen werden. Zur Gewährleistung eines definierten, vorhersagbaren äquivalenten Durchmessers 26 des Verbindungspunkte 24 ist in diesem Ausführungsbeispiel vorgesehen, dass die Vektoren 31, 32 miteinander fluchten.

Wie zuvor ausgeführt ist, ist es vorteilhaft, wenn der Abstand 27 zwischen der Stützstruktur 05 und dem Fertigteil 02 möglichst klein gewählt wird. Dabei ist jedoch eine unkontrollierte Verbindung zwischen den Verbindungspunkten 24 zu vermeiden. Daher ist vorgesehen, dass der Abstand 36 von Strahlmittelpunkt zum Fertigteil 02 in der ersten Teilanbindung 21 zwischen den Verbindungspunkten 24 ungefähr dem 2-fachen bis 3-fachen Schmelzradius 34 entspricht.

## Patentansprüche

1. Bauteil (01, 11) hergestellt in einem Pulverbett-Fertigungsprozess, insbesondere aus einem metallischen Werkstoff bestehend, ausgehend von einer Grundebene (09), welche (09) sich in einer X-Richtung und einer Y-Richtung erstreckt und eine senkrechte Z-Richtung definiert, umfassend
- ein Fertigteil (02, 12) mit zumindest einem einfachen Teilabschnitt (03, 13), welcher (03, 13) ausgehend von der Grundebene (09) ohne eine Stützstruktur (05, 15) herstellbar ist, und mit zumindest einem schwierigen Teilabschnitt (04, 14), welcher (04, 14) von der Grundebene (09) beabstandet ist und nicht ohne eine Stützstruktur (05, 15) herstellbar ist, und
- eine Stützstruktur (05, 15), welche (05, 15) über einer erste Teilanbindung (21, 31) mit dem einfachen Teilabschnitt (03, 13) und über eine zweite Teilanbindung (22, 32) mit dem schwierigen Teilabschnitt (04, 14) verbunden ist,
**dadurch gekennzeichnet,**
**dass** die erste Teilanbindung (21, 31) von keinem oder zumindest einem Brückenelement (23) und einer Vielzahl Verbindungspunkte (24) gebildet wird, wobei jedes vorhandene Brückenelement (23) eine Breite (25) von höchstens 2 mm und jeder Verbindungspunkt (24) einen äquivalenten Durchmesser (26) von höchstens 1 mm aufweist.

2. Bauteil (01, 11) nach Anspruch 1,
wobei die Querschnittsfläche der Verbindungspunkte (24) in Summe zumindest der 5-fachen, insbesondere zumindest der 20-fachen, Querschnittsfläche des/der Brückenelements/e (23) in Summe entspricht.

3. Bauteil (01, 11) nach Anspruch 1 oder 2,
wobei die Breite (25) des Brückenelements (23) höchstens 1 mm beträgt; und/oder
wobei der äquivalente Durchmesser (26) höchstens 0,5 mm beträgt; und/oder
wobei der Abstand zwischen den Verbindungspunkten (24) zumindest dem 2-fachen, insbesondere zumindest dem 5-fachen, des äquivalenten Durchmessers (26) entspricht.

4. Bauteil (01, 11) nach einem der Ansprüche 1 bis 3, wobei ein Abstand (27) zwischen dem Fertigteil und der Stützstruktur im zumindest mehrheitlichen Anteil der ersten Teilanbindung höchstens 1 mm, insbesondere höchsten 0,6 mm, beträgt.

5. Bauteil (01, 11) nach einem der Ansprüche 1 bis 4, welches eine spezifische Schmelzpunktausdehnung (33) aufweist, wobei der äquivalente Durchmesser (26) kleiner ist als die spezifische Schmelzpunktausdehnung (33).

6. Bauteil (01, 11) nach einem der Ansprüche 1 bis 5, wobei ein Brückenelement (23) am zur Grundebene (09) weisenden Rand der ersten Teilanbindung (21, 31) angeordnet ist.

7. Verfahren zur Herstellung eines Bauteils (01, 11) nach einem der vorhergehenden Ansprüche mit den Schritten:
- Bereitstellung eines Modells des Fertigteils (02, 12);
- Bestimmung des einfachen Teilabschnitts (03, 13) und des schwierigen Teilabschnitts (04, 14);
- Bestimmung der Stützstruktur (05, 15), welche (05, 15) über die erste Teilanbindung (21, 31) mit dem einfachen Teilabschnitt (03, 13) und über die zweite Teilanbindung (22, 32) mit dem schwierigen Teilabschnitt (04, 14) verbunden ist;
- Herstellung des Bauteils (01, 11) in einem Pulverbett-Fertigungsprozess, bei dem mittels zumindest eines Strahles ein lokales Aufschmelzen eines pulverförmigen Werkstoffs erfolgt.

8. Verfahren nach Anspruch 7,
wobei in jeder Schicht zunächst die Stützstruktur (05, 15) und nachfolgend das Fertigteil (02, 12) erzeugt wird.

9. Verfahren nach Anspruch 7 oder 8,
wobei der Strahlmittelpunkt bei Erzeugung der Verbindungspunkte (24) immer vom Fertigteil (02) beabstandet ist.

10. Verfahren nach Anspruch 9,
wobei der Abstand (35) vom Strahlmittelpunkt zum Fertigteil (02, 12) bei der Erzeugung der Verbindungspunkte (24) zumindest 0,05 mm, insbesondere zumindest 0,1 mm, beträgt.

11. Verfahren nach einem der Ansprüche 7 bis 10,
wobei der Abstand (35, 36) vom Strahlmittelpunkt zum Fertigteil (02, 12) bei Erzeugung der ersten Teilanbindung (21, 311) in zumindest dessen halber Fläche maximal 1,5 mm, insbesondere maximal 1 mm, beträgt.

12. Verfahren nach einem der Ansprüche 7 bis 11,
welches positionsabhängig eine spezifische Schmelzpunktausdehnung (33) aufweist, wobei der äquivalente Durchmesser (26) kleiner ist als die spezifische Schmelzpunktausdehnung (33) an der Position des Verbindungspunktes (24); und/oder
welches positionsabhängig einen spezifischen Schmelzradius (34) gemessen vom Strahlmittelpunkt senkrecht zum Fertigteil (02, 12) aufweist, wobei der Abstand (36) vom Strahlmittelpunkt zum Fertigteil (02, 12) bei der Erzeugung der Verbindungspunkte (24) zumindest dem 0,1-fachen und maximal dem 0,9-fachen, insbesondere zumindest dem 0,5-fachen und/oder maximal dem 0,8-fachen, Schmelzradius (34) entspricht.

13. Verfahren nach einem der Ansprüche 7 bis 12,
welches positionsabhängig einen spezifischen Schmelzradius (34) gemessen vom Strahlmittelpunkt aus senkrecht zum Fertigteil (02, 12) aufweist, wobei der Abstand (35, 36) vom Strahlmittelpunkt zum Fertigteil (02, 12) bei Erzeugung der ersten Teilanbindung (21, 31) in zumindest dessen halber Fläche maximal dem 10-fachen, insbesondere maximal dem 5-fachen, insbesondere maximal dem 3-fachen, Schmelzradius (34) entspricht.

14. Verfahren nach einem der Ansprüche 7 bis 13,
wobei der Strahl jeweils entlang eines Vektors (31, 32) geführt wird, wobei jeder Vektor (32) bei der Abbildung der Stützstruktur (05, 15) jeweils mit einem Vektor (31) bei der Abbildung des Fertigteils (02, 12) fluchtet.
